# EUROPÄISCHE PATENTANMELDUNG

(11) **EP 1 785 610 A2**
(43) Veröffentlichungstag der Anmeldung: **16.05.2007**
(21) Anmeldenummer: 06020352.8
(22) Anmeldetag: 28.09.2006
(51) Int. Cl.: F02B 37/24

(54) **Verfahren und Steuergerät zur Steuerung eines Turboladers mit steuerbarem Turbinen-Strömungsquerschnitt**

(30) Priorität: 14.11.2005 DE 102005054524
(71) Anmelder: Dr. Ing. h.c. F. Porsche Aktiengesellschaft, 70435 Stuttgart (DE)
(72) Erfinder: Hofstetter, Matthias, 77975 Ringsheim (DE)

(57) **Zusammenfassung**

Vorgestellt wird ein Verfahren zur Steuerung eines Turboladers (36), der einen variablen Ladedruck für einen Verbrennungsmotor (10) unter Verwendung eines steuerbaren Turbinen-Strömungsquerschnitts erzeugt und dessen Turbinen-Strömungsquerschnitt bei einer Anforderung eines erhöhten Ladedrucks vorübergehend verringert und wieder vergrößert wird. Das Verfahren zeichnet sich dadurch aus, dass ein Maß für einen Abgasmassenstrom durch den Turbinen-Strömungsquerschnitt gebildet wird und die Vergrößerung des Turbinen-Strömungsquerschnitts als Funktion des Maßes erfolgt. Ferner wird ein Steuergerät (52) vorgestellt, welches den Ablauf des Verfahrens steuert.

## Beschreibung

Die Erfindung betrifft ein Verfahren zur Steuerung eines Turboladers, der einen variablen Ladedruck für einen Verbrennungsmotor unter Verwendung eines steuerbaren Turbinen-Strömungsquerschnitts erzeugt und dessen Turbinen-Strömungsquerschnitt bei einer Anforderung eines erhöhten Ladedrucks vorübergehend verringert und wieder vergrößert wird. Die Erfindung betrifft ferner ein Steuergerät, welches den Ablauf des Verfahrens steuert.

Ein solches Verfahren ist aus der Reihe "Die Bibliothek der Technik, Band 103, Abgasturbolader", Verlag Moderne Industrie, D-86896 Landsberg/Lech, ISBN 3-478-93263-7, dort Seite 40, bekannt. Diese Literaturstelle behandelt einen Turbolader mit verstellbarer Turbinengeometrie (VTG), bei dem der Turbinen-Strömungsquerschnitt durch Schließen von Leitschaufeln verkleinert wird, um ein höheres Druckgefälle zwischen dem Turbineneintritt und dem Turbinenaustritt zu erzeugen. Als Folge des höheren Druckgefälles stellt sich dann der gewünschte erhöhte Ladedruck ein. Zu Beginn einer Fahrzeugbeschleunigung aus niedrigen Drehzahlen soll der Strömungsquerschnitt minimal sein und dann mit zunehmender Drehzahl wieder vergrößert und an den jeweiligen Betriebspunkt angepasst werden.

Bei Verbrennungsmotoren mit Turboladern ohne steuerbaren Turbinen-Strömungsquerschnitt tritt eine gewisse Verzögerung zwischen einer Anforderung eines hohen Ladedrucks und seiner Realisierung auf. So werden Ottomotoren zum Beispiel außerhalb der Volllast gedrosselt betrieben. Ihr Abgasmassenstrom, der die Turbine treibt, variiert daher mit der Drehmomentanforderung durch einen Fahrer. Wird ein höheres Drehmoment und damit ein höherer Ladedruck gewünscht, muss sich zunächst der vom Verbrennungsmotor produzierte Abgasmassenstrom erhöhen, um die Turbinendrehzahl zu steigern und damit den Ladedruck zu erhöhen.

Diese Verzögerung ist unerwünscht und kann mit der bekannten Steuerung des Turbinen-Strömungsquerschnitts verringert werden. Allerdings wird die genannte Verzögerung durch die bekannte Steuerung nicht vollständig beseitigt.

Vor diesem Hintergrund besteht die Aufgabe der Erfindung in einer weiteren Verringerung der genannten Verzögerung.

Diese Aufgabe wird bei einem Verfahren der eingangs genannten Art dadurch gelöst, dass ein Maß für einen Abgasmassenstrom durch den Turbinen-Strömungsquerschnitt gebildet wird und die Vergrößerung des Turbinen-Strömungsquerschnitts als Funktion des Maßes erfolgt. Ferner wird diese Aufgabe durch ein Steuergerät der eingangs genannten Art gelöst, das den Ablauf dieses Verfahrens steuert.

### Vorteile der Erfindung

Die Turbine kann grundsätzlich mit einer unterkritischen oder überkritischen Strömung betrieben werden. In jedem Fall stellt sich über der Turbine ein Druckgefälle ein. Während der Abgasmassenstrom durch die Turbine bei unterkritischer Strömung mit zunehmendem Wert des Druckgefälles ebenfalls zunimmt, stellt sich bei überkritischer Strömung ein Abgasmassenstrom ein, der nahezu konstant ist und der mit einer weiteren Steigerung des Druckgefälles nicht mehr wesentlich zunimmt. Daher kann der Abgasgegendruck, der sich als Staudruck vor der Turbine aufbaut, unerwünscht ansteigen. Ein zu hoher Abgasgegendruck wirkt sich tendenziell verringernd auf Füllungen von Brennräumen des Verbrennungsmotors mit Luft (bei Dieselmotoren oder Ottomotoren mit Direkteinspritzung) oder Kraftstoff/Luft-Gemisch (bei Motoren mit Saugrohreinspritzung oder Vergasern) aus. Beides ist im Hinblick auf einen schnellen Drehmomentaufbau kontraproduktiv.

Wird dagegen eine hohe Bremswirkung des Verbrennungsmotors gewünscht, kann ein hoher Abgasgegendruck hilfreich sein, um die Gaswechselarbeit des Verbrennungsmotors zu steigern.

Die Erfindung erlaubt in jedem Fall eine bedarfsgerechte Steuerung des Turbinen-Strömungsquerschnitts zur Erzielung der genannten Vorteile und Vermeidung der Nachteile.

Dabei ist bevorzugt, dass die Vergrößerung des Turbinen-Strömungsquerschnitts als Funktion des Maßes so erfolgt, dass im Strömungsquerschnitt eine unterkritische Strömung herrscht. Durch dieses Merkmal wird bei einem Wunsch nach einem schnellen Drehmomentanstieg ein kontraproduktiver Anstieg des Abgasgegendrucks wirksam begrenzt.

Bevorzugt ist auch, dass die Vergrößerung des Turbinen-Strömungsquerschnitts als Funktion des Maßes so erfolgt, dass im Strömungsquerschnitt gerade noch eine unterkritische Strömung herrscht. Dieses Merkmal erlaubt eine Einstellung von für den Drehmomentaufbau optimalen Werten des Übertrags kinetischer Energie aus dem Abgas auf das Turbinenrad bei gleichzeitig niedrigem Abgasgegendruck. Die Erfindung entfaltet ihre Vorteile in besonderer Weise bei Ottomotoren, wenn deren Drehmoment aus einem Betriebszustand mit niedrigem Abgasmassenstrom erhöht werden soll. Bei Dieselmotoren ist der Abgasmassenstrom dagegen auch bei niedriger Last bereits vergleichsweise hoch.

Weitere Vorteile ergeben sich aus der Beschreibung, den abhängigen Ansprüchen und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Turbolader;
- Fig. 2: den Turbolader in einer ersten Schnittdarstellung;
- Fig. 3: den Turbolader in einer zweiten Schnittdarstellung;
- Fig. 4: eine Durchflusskennlinie für einen Drosselquerschnitt;
- Fig. 5: zeitliche Verläufe von Drehmomentanstiegen, wie sie mit der Erfindung und dem Stand der Technik erzielt werden;
- Fig. 6: ein Flussdiagramm als Ausführungsbeispiel eines erfindungsgemäßen Verfahrens; und
- Fig. 7: Ausgestaltungen zur Bildung von Stellgrößen für den Strömungsquerschnitt als Funktion eines Maßes für den Abgasmassenstrom.

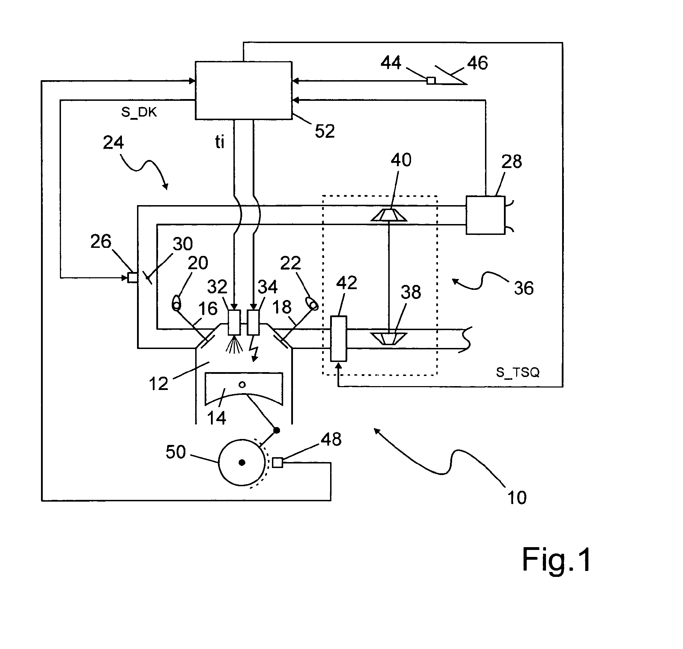

Im Einzelnen zeigt Fig. 1 einen Verbrennungsmotor 10 mit wenigstens einem Brennraum 12, der von einem Kolben 14 beweglich abgedichtet wird. Ein Wechsel von Füllungen des Brennraums 12 wird über ein Einlassventil 16 und ein Auslassventil 18 gesteuert, wobei das Einlassventil 16 von einem Einlassventilsteller 20 und das Auslassventil 18 von einem Auslassventilsteller 22 betätigt wird. Die Steller 20, 22 können als mit fester Phasenbeziehung laufende Nockenwellen, Nockenwellen mit variabler Phasenbeziehung, oder als mechanische, hydraulische oder elektromagnetische Stellglieder realisiert sein, die einen variablen Hub des Einlassventils 16 und des Auslassventils 18 erlauben.

Bei geöffnetem Einlassventil 16 strömt Luft oder ein Gemisch aus Luft und Brennstoff aus einem Ansaugsystem 24 in den Brennraum 12. Die Menge der einströmenden Luft oder des einströmenden Gemisches wird über einen Drosselklappensteller 26 und/oder, bei entsprechender Ausgestaltung des Einlassventilstellers 20, über einen variablen Hub des Einlassventils 16 eingestellt und bevorzugt mit einem Füllungssensor 28 gemessen, der als Luftmassenmesser oder Saugrohrdrucksensor realisiert sein kann.
Die Drosselklappe 30 ist bei Motorkonzepten (z.B. Diesel) mit Qualitätsregelung nicht zwingend erforderlich. Die Brennstoffdosierung erfolgt entweder im Ansaugsystem 24 (Saugrohreinspritzung) oder durch direkte Einspritzung von Brennstoff in den Brennraum 12 (Direkteinspritzung) durch einen Injektor 32.

Auf jeden Fall wird in dem Brennraum 12 ein brennfähiges Brennstoff/Luft-Gemisch erzeugt, das bei einem Ottomotor von einer Zündkerze 34 oder bei einem Dieselmotor durch eine Einspritzung von Kraftstoff in verdichtete Luft gezündet wird. Restgase der verbrannten Füllung des Brennraums 12 werden über das geöffnete Auslassventil 18 ausgestoßen.

Der in der Figur 1 dargestellte Verbrennungsmotor 10 weist einen Abgasturbolader 36 auf, dessen Turbinenrad 38 von den ausgestoßenen Abgasen angetrieben wird und das seinerseits ein Verdichterrad 40 im Ansaugsystem 24 antreibt. Der Abgasturbolader 36 weist ferner einen steuerbaren Turbinen-Öffnungsquerschnitt 42 auf.

Drehmomentanforderungen eines Fahrers werden durch einen Fahrerwunschgeber 44 erfasst, der die Stellung eines Fahrpedals 46 des Kraftfahrzeugs erfasst. Ein Drehwinkelsensor 48 tastet Winkelmarkierungen eines drehfest mit einer Kurbelwelle des Verbrennungsmotors 10 verbundenen Geberrades 50 ab und liefert damit eine Information über die Winkellage und Winkelgeschwindigkeit der Kurbelwelle.
Es versteht sich, dass zur Steuerung und/oder Regelung des Verbrennungsmotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Verbrennungsmotors 10 erfassen. Die Erfindung ist daher nicht auf eine Verwendung bei einem Verbrennungsmotor 10 beschränkt, der nur die bisher angegebenen Sensoren 28, 44, 48 aufweist.

Zur Steuerung des Verbrennungsmotors 10 werden die Signale des Füllungssensors 28, des Fahrerwunschgebers 44, des Drehwinkelsensors 48 und ggf. die Signale alternativer oder weiterer Sensoren von einem Motorsteuergerät 52 verarbeitet, das daraus Stellsignale zur Steuerung von Funktionen des Verbrennungsmotors 10 bildet.

Wesentlich sind in diesem Zusammenhang Stellsignale, die den vom Verbrennungsmotor 10 erzeugten Abgasmassenstrom beeinflussen. Das sind hier im Wesentlichen Drosselklappenstellsignale S_DK und Einspitzimpulsbreiten ti, die einen Luft-, beziehungsweise einen Kraftstoff-Massenfluss in den Brennraum 12 beeinflussen. Ferner steuert das Steuergerät 52 einen Turbinen-Öffnungsquerschnitt TSQ mit einem Stellsignal S_TSQ.

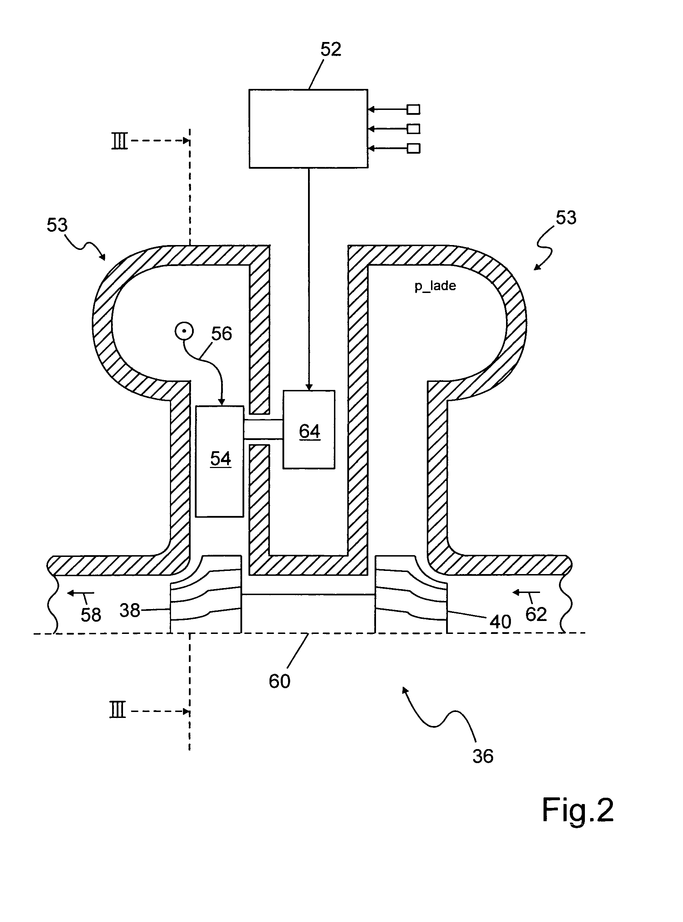

Fig. 2 zeigt den Turbolader 36 aus der Fig. 1 in einer ersten Schnittdarstellung. Das Turbinenrad 38 wird vom Abgas aus dem Turbinengehäuse 52 aus einer Richtung und mit einer Geschwindigkeit angeströmt, die durch die Stellung von einstellbaren Leitschaufeln 54 vorgegeben wird. Das in das Turbinenrad 38 eintretende Abgas 56 besitzt zunächst eine zentripetale Komponente seiner Strömungsrichtung und verlässt das Turbinenrad 38 in axialer Richtung 58. Die dabei auf das Turbinenrad 38 übertragene kinetische Abgasenergie treibt über die Welle 60 das Verdichterrad 40 an. Das Verdichterrad 40 saugt Luft in axialer Richtung 62 an, fördert sie in das Spiralrohr und erzeugt dort den Ladedruck p_lade. Die einstellbare Leitschaufel 54 wird von einem Antrieb 64 betätigt, der vom Steuergerät 52 angesteuert wird. Der Antrieb 64 ist in einer Ausgestaltung als Elektro-Schrittmotor realisiert.

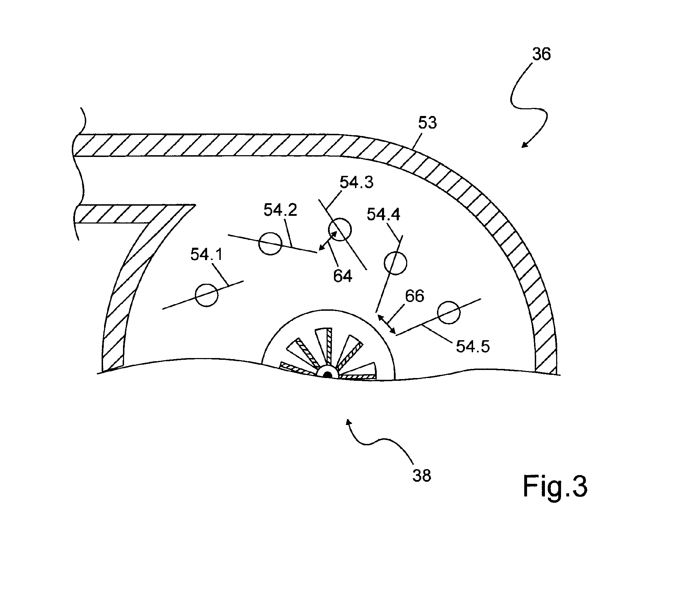

Fig. 3 zeigt einen weiteren Schnitt durch das Turbinengehäuse 53 längs der Linie III-III in der Fig. 2 mit fünf Leitschaufeln 54.1, 54.2, 54.3, 54.4 und 54.5. Abweichend von de Realität, in der sämtliche Leitschaufeln 54.1, 54.2, 54.3, 54.4 und 54.5 gleich eingestellt werden, sind die Leitschaufeln 54.1, 54.2 und 54.2 in einer geschlossenen und die Leitschaufeln 54.4. und 54.5 in einer weiter offenen Stellung dargestellt. Der mit der Ziffer 64 bezeichnete Parameter für den Strömungsquerschnitt TSQ, der sich in der geschlossenen Stellung einstellt, ist geringer als der entsprechende Parameter 66, der sich in der weiter offenen Stellung einstellt. Daher ist auch der Strömungsquerschnitt TSQ(66) größer als TSQ(64). Die auf das Turbinenrad 38 übertragene kinetische Energie wird mit Hilfe der Leitschaufeln 54.1, 54.2, 54.3, 54.4 und 54.5 durch Veränderung von Anströmungs-Winkel und -Geschwindigkeit in Bezug auf das Turbinenrad 38 eingestellt. In geschlossener Leitschaufel-Position führen große Tangentialkomponenten der Strömungsgeschwindigkeit und ein hohes Enthalpiegefälle über dem Turbinenrad 38 zu einer hohen Turbinenleistung und damit einem hohen Ladedruck p_lade. In voll geöffneter Position der Leitschaufeln ergibt sich der maximale Abgasmassenstrom durch die Turbine bei hohem zentripetalem Anteil des Geschwindigkeitsvektors der Strömung bei einem kleineren Enthalpiegefälle.

Ein wesentliches Element der Erfindung besteht in diesem Zusammenhang darin, dass die Leitschaufeln 54.1, 54.2, 54.3, 54.4 und 54.5 bei einem angeforderten Übergang von einem niedrigen Ladedruck auf einen hohen Ladedruck zunächst auf einen vergleichsweise kleinen Strömungsquerschnitt TSQ(64) und anschließend in Abhängigkeit vom Abgasmassenstrom durch die Turbine auf einen größeren Strömungsquerschnitt TSQ(66) eingestellt werden. Dabei erfolgt die Verringerung und/oder Vergrößerung des Strömungsquerschnitts TSQ so, dass sich im Strömungsquerschnitt TSQ und damit in der ganzen Turbine eine unterkritische Strömung einstellt und/oder aufrechterhalten wird.

Dabei wird unter einer unterkritischen Strömung eine Strömung mit einer Unterschallgeschwindigkeit verstanden. Bei der Durchströmung eines lokalen Minimums eines Strömungsquerschnitts stellt sich bekanntlich eine maximale Strömungsgeschwindigkeit ein. Mit wachsendem Differenzdruck über dem Strömungsquerschnitt wächst der Massenstrom durch den Strömungsquerschnitt bis zum Erreichen der Schallgeschwindigkeit an. Eine weitere Erhöhung der Druckdifferenz hat dann keine Erhöhung des Massenstroms mehr zur Folge.

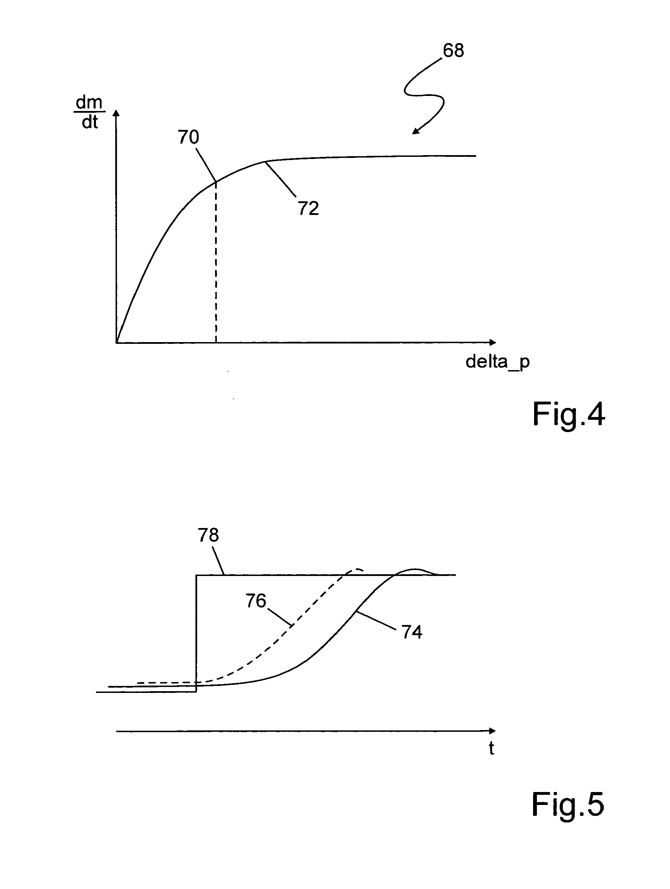

Diese Verhältnisse sind in der Fig. 4 qualitativ dargestellt, die eine Durchflusskennlinie 68 für einen Drosselquerschnitt zeigt, die auf den Strömungsquerschnitt TSQ übertragbar ist. Dabei ist der Massenstrom dm/dt durch den Drosselquerschnitt über der Druckdifferenz delta_p über dem Drosselquerschnitt aufgetragen. Die Grenze zwischen unterkritischen und überkritischen Strömungen liegt bei dem Knick 70 in der Kennlinie 68. Nach einem Übergang in den überkritischen Bereich 72 steigt die Druckdifferenz überproportional stark an, während sich der Massenstrom dm/dt nur noch wenig ändert.

Im Fall des Strömungsquerschnitts TSQ der Turbine kann die Druckdifferenz nur durch ein Anwachsen des Druckes auf der Eingangsseite der Turbine steigen, da die Ausgangsseite über das weitere Abgassystem an den Umgebungsdruck gekoppelt ist. Damit steigt bei überkritischer Strömung durch die Turbine der Abgasgegendruck an. Über die interne Abgasrückführung bei während der sogenannten Ventilüberschneidung gleichzeitig offenem Einlassventil 16 und Auslassventil 18 führt dies zu einer verringerten Brennraumfüllung mit brennbarem Gemisch und damit zu einer unerwünschten Verlangsamung des Drehmomentanstiegs.

Dieser nachteilige Effekt wird durch das Einstellen einer unterkritischen Strömung im Strömungsquerschnitt vermieden. Durch Einstellen der unterkritischen Strömung kann ein Verhältnis zwischen Abgasgegendruck, Strömung im Spalt und Druck nach der Turbine erreicht werden, das im Hinblick auf eine gewünschte Schnelligkeit eines Drehmomentanstiegs optimal ist.

Fig. 5 veranschaulicht diese Wirkung durch einen Vergleich eines Drehmomentanstiegs 74 mit herkömmlicher Verstellung der Leitschaufeln und eines Drehmomentanstiegs 76 mit erfindungsgemäßer Verstellung der Leitschaufeln in Abhängigkeit von dem Abgasmassenstrom über die Turbine bei einem stufenförmigen Anstieg des Solldrehmoments 78 in willkürlichen Einheiten über der Zeit t.

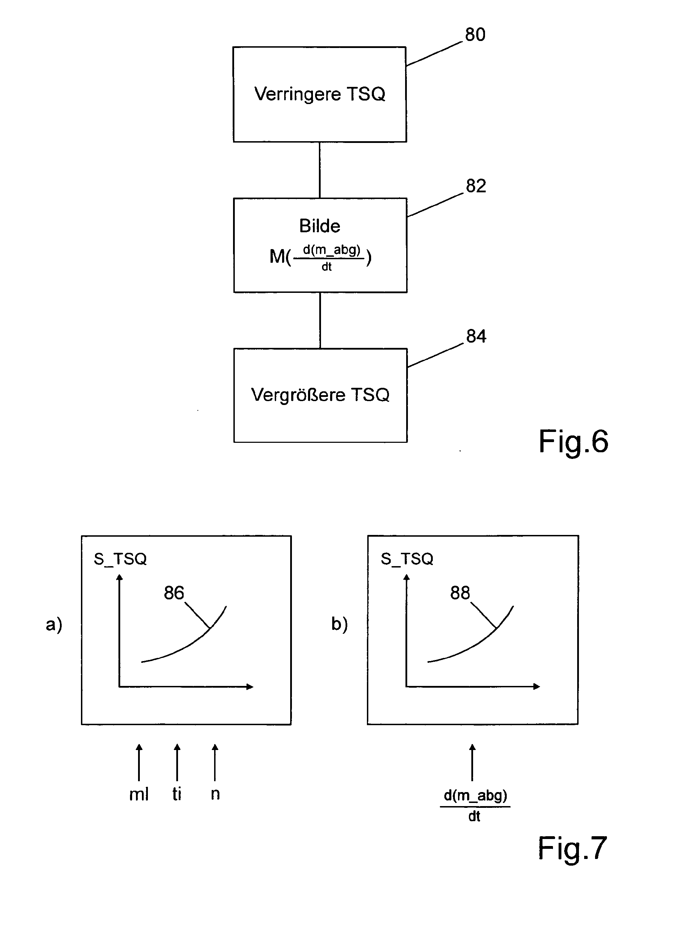

Fig. 6 stellt ein Flussdiagramm als Ausführungsbeispiel eines erfindungsgemäße Verfahrens dar, wie es vom Steuergerät 52 zur Steuerung des Turboladers 36 abgearbeitet wird.

In einem Schritt 80 wird der Turbinen-Strömungsquerschnitt TSQ bei einer Anforderung eines erhöhten Ladedrucks p_lade verringert. Anschließend erfolgt im Schritt 82 die Bildung eines Maßes M(d(m_abg)/dt) für den Abgasmassenstrom d(m_abg)/dt durch den Turbinen-Strömungsquerschnitt TSQ. In einer Ausgestaltung wird bereits die Verringerung des Strömungsquerschnitts TSQ im Schritt 80 so gesteuert dass im Strömungsquerschnitt TSQ eine unterkritische Strömung herrscht.

Im Schritt 84 wird der Turbinen-Strömungsquerschnitt als Funktion des Maßes so vergrößert, dass im Strömungsquerschnitt eine unterkritische Strömung, insbesondere eine gerade noch unterkritische Strömung herrscht. Dabei wird das Maß für den Abgasmassenstrom bevorzugt als Funktion eines Ansaugluftmassenstroms und/oder als Funktion eines Kraftstoffmassenstroms in Brennräume des Verbrennungsmotors erzeugt.

Der Ansaugluftmassenstrom bestimmt den Abgasmassenstrom wesentlich mit. Der Kraftstoffmassenstrom ist mit dem Ansaugluftmassenstrom über das Kraftstoff/Luftverhältnis in Brennräumen gekoppelt und kann daher näherungsweise als proportionale Ersatzgröße für den Ansaugluftmassenstrom herangezogen werden. Bei Lambda = 1 beträgt die Kraftstoffmasse das 1/14,7 -fache der Luftmasse, so dass sie je nach gewünschter oder erforderlicher Genauigkeit ergänzend berücksichtigt werden kann.

Anstelle des Ansaugluftmassenstroms ml kann auch das Signal des Fahrerwunschgebers 44 und/oder eines Produktes aus Brennraumfüllung, Drehzahl und eines die Zylinderzahl und das Arbeitsverfahren charakterisierenden Proportionalitätsfaktors herangezogen werden, da der Abgasmassenstrom mit zunehmender Brennraumfüllung, Drehzahl und Zylinderzahl wächst. Die Werte für Brennraumfüllung und Drehzahl werden in modernen Steuergeräten 52 ohnehin gebildet und sind daher ohne zusätzlichen Aufwand bekannt.

Bevorzugt ist auch, dass das Maß für den Abgasmassenstrom ergänzend in Abhängigkeit von einem Zündzeitpunkt und/oder von einem Einspritzzeitpunkt erzeugt wird. Beide Parameter beeinflussen die Abgastemperatur. Spätzündungen verzögern den Brennbeginn und steigern damit die Abgastemperatur. Beim Dieselmotor gilt dies für Einspritzungen, die dort einen Brennbeginn auslösen.

Letztlich sind beide Parameter Stellgrößen für den Verbrennungsschwerpunkt und beeinflussen über den thermodynamischen Wirkungsgrad die Abgastemperatur, die mit nach spät verschobenem Brennbeginn ansteigt. Die Abgastemperatur beeinflusst die kinetische Energie der Abgase und den Abgasvolumenstrom, der seinerseits die Strömungsverhältnisse im Turbinen-Strömungsquerschnitt beeinflusst. Die Berücksichtigung der Abgastemperatur steigert damit die Genauigkeit, mit der ein Übergang von unterkritischer Strömung zu überkritischer Strömung im Turbinen-Strömungsquerschnitt angenähert werden kann.

Ferner ist bevorzugt, dass eine Stellgröße S_TSQ für den Turbinen-Strömungsquerschnitt durch Zugriff auf eine Kennlinie 86 oder ein Kennfeld ermittelt wird, wobei der Zugriff mit wenigstens einer der genannten Größen ml, ti, Drehzahl n, aus denen der Abgasmassenstrom erzeugt wird, als Kennfeldeingangsgröße erfolgt. Diese Ausgestaltung lässt sich besonders einfach realisieren und ist in der Fig. 7a dargestellt.

Die alternative Ausgestaltung der Fig. 7b sieht vor, dass eine Stellgröße S_TSQ für den Turbinen-Strömungsquerschnitt durch Zugriff auf eine Kennlinie 88 ermittelt wird, die durch Werte eines Abgasmassenstroms d(m_abg)/dt adressiert wird. Der Abgasmassenstrom kann dabei durch Verarbeiten einer Auswahl der genannten Größen durch ein Rechenmodell ermittelt werden, was eine genaue Steuerung des Turbinen-Öffnungsquerschnitts TSQ in der Nähe des Übergangs zur überkritischen Strömung erlaubt.

Bei Verbrennungsmotoren mit mehreren Turboladern mit verstellbarer Turbinengeometrie wird das Verfahren und/oder eine oder mehrere seiner Ausgestaltungen entsprechend für sämtliche Turbolader angewendet.

## Patentansprüche

1. Verfahren zur Steuerung eines Turboladers (36), der einen variablen Ladedruck (p_lade) für einen Verbrennungsmotor (10) unter Verwendung eines steuerbaren Turbinen-Strömungsquerschnitts (TSQ) erzeugt und dessen Turbinen-Strömungsquerschnitt (TSQ) bei einer Anforderung eines erhöhten Ladedrucks (p_lade) vorübergehend verringert und wieder vergrößert wird, **dadurch gekennzeichnet, dass** ein Maß (M(d(m_abg)/dt)) für einen Abgasmassenstrom (d(m_abg)/dt) durch den Turbinen-Strömungsquerschnitt (TSQ) gebildet wird und die Vergrößerung des Turbinen-Strömungsquerschnitts (TSQ) als Funktion des Maßes (M(d(m_abg)/dt)) erfolgt.

2. Verfahren nach Anspruch 1, **dadurch gekennzeichnet, dass** die Verringerung und Vergrößerung des Turbinen-Strömungsquerschnitts (TSQ) als Funktion des Maßes (M(d(m_abg)/dt)) so erfolgt, dass im Strömungsquerschnitt (TSQ) eine unterkritische Strömung herrscht.

3. Verfahren nach Anspruch 2, **dadurch gekennzeichnet, dass** die Vergrößerung des Turbinen-Strömungsquerschnitts (TSQ) als Funktion des Maßes (M(d(m_abg)/dt)) so erfolgt, dass im Strömungsquerschnitt (TSQ) gerade noch eine unterkritische Strömung herrscht.

4. Verfahren nach einem der vorhergehenden Ansprüche, **dadurch gekennzeichnet, dass** das Maß (M(d(m_abg)/dt)) für den Abgasmassenstrom (d(m_abg)dt) als Funktion eines Ansaugluftmassenstroms erzeugt wird.

5. Verfahren nach einem der vorhergehenden Ansprüche, **dadurch gekennzeichnet, dass** das Maß (M(d(m_abg)/dt)) für den Abgasmassenstrom (d(m_abg)) alternativ oder ergänzend als Funktion eines Kraftstoffmassenstroms in Brennräume (12) des Verbrennungsmotors (10) erzeugt wird.

6. Verfahren nach einem der vorhergehenden Ansprüche, **dadurch gekennzeichnet, dass** das Maß (M(d(m_abg)/dt)) für den Abgasmassenstrom (d(m_abg/dt)) ergänzend in Abhängigkeit von einem Zündzeitpunkt erzeugt wird.

7. Verfahren nach einem der vorhergehenden Ansprüche, **dadurch gekennzeichnet, dass** das Maß (M(d(m_abg)/dt)) für den Abgasmassenstrom (d(m_abg/dt)) ergänzend in Abhängigkeit von einem Einspritzzeitpunkt erzeugt wird.

8. Verfahren nach einem der vorhergehenden Ansprüche, **dadurch gekennzeichnet, dass** eine Stellgröße (S_TSQ) für den Turbinen-Strömungsquerschnitt (TSQ) durch Zugriff auf eine Kennlinie (86) oder ein Kennfeld ermittelt wird, wobei der Zugriff mit wenigstens einer der genannten Größen, aus denen der Abgasmassenstrom (d(m_abg/dt)) erzeugt wird, als Kennfeldeingangsgröße erfolgt.

9. Verfahren nach einem der vorhergehenden Ansprüche, **dadurch gekennzeichnet, dass** eine Stellgröße (S_TSQ) für den Turbinen-Strömungsquerschnitt (TSQ) durch Zugriff auf eine Kennlinie (88) ermittelt wird, die durch Werte eines Abgasmassenstroms (d(m_abg/dt)) adressiert wird.

10. Steuergerät (52) zur Steuerung eines Turboladers (36), der einen variablen Ladedruck (p_lade) für einen Verbrennungsmotor (10) unter Verwendung eines steuerbaren Turbinen-Strömungsquerschnitts (TSQ) erzeugt, wobei das Steuergerät (52) einen Turbinen-Strömungsquerschnitt des Turboladers (36) bei einer Anforderung eines erhöhten Ladedrucks (p_lade) vorübergehend verringert und wieder vergrößert, **dadurch gekennzeichnet, dass** das Steuergerät (52) ein Maß (M(d(m_abg)/dt)) für einen Abgasmassenstrom (d(m_abg)/dt) durch den Turbinen-Strömungsquerschnitt (TSQ) bildet und die Vergrößerung des Turbinen-Strömungsquerschnitts (TSQ) als Funktion des Maßes (M(d(m_abg)/dt)) steuert.

11. Steuergerät (52) nach Anspruch 10, **dadurch gekennzeichnet, dass** es einen Ablauf von wenigstens einem der Verfahren nach den Ansprüchen 2 bis 9 steuert.
